# EUROPÄISCHE PATENTANMELDUNG

(11) **EP 1 995 054 A1**
(43) Veröffentlichungstag der Anmeldung: **26.11.2008**
(21) Anmeldenummer: 07010312.2
(22) Anmeldetag: 24.05.2007
(51) Int. Cl.: B32B 15/08, B65D 77/20

(54) **Verpackungsmaterial**

(71) Anmelder: Constantia Hueck Folien GmbH & Co. KG, 92712 Pirk (DE)
(72) Erfinder: Helmlinger, Jürgen, 95671 Bärnau (DE); Fischer, Andreas, 92702 Kohlberg (DE)
(74) Vertreter: Landgraf, Elvira

(57) **Zusammenfassung**

Folienverbund für Verpackungsmaterial, insbesondere für Behälterabdeckungen, dadurch gekennzeichnet, dass der Folienverbund aus einem symmetrischen Kunststoff/Aluminium/Kunststoff-Verbund besteht.

## Beschreibung

Die Erfindung betrifft ein Verpackungsmaterial, insbesondere geeignet für Behälterabdeckungen.

Behälterabdeckungen, die für die Verpackung von Lebensmitteln, wie Milchprodukten, beispielsweise Joghurt, Käse, Topfen, Säfte, Pasteten, Erdnüsse und dergleichen, verwendet werden, müssen an der dem Produkt zugewandten Seite lebensmittelecht (Einhaltung der lebensmittelrechtlichen Bestimmungen) ausgeführt werden.

Aus der WO 98/26931 sind Verpackungselemente bekannt, die auf der dem Füllgut zugewandten Seite eine oberflächenraue Beschichtung auf einem Trägermaterial aufweist, wobei das Trägermaterial aus Kunststoff oder Aluminium oder aus zweilagigen Verbunden aus Aluminium/Aluminium. Aluminium/Kunststoff, Kunststoff/Aluminium, Aluminium/Papier und dergleichen verwendet wird.

Aus der WO 01/74685 ist ein Deckelelement zum Verschließen von Behältern bekannt, das aus einer einheitlichen Metallfolie oder einer Kunststofffolie besteht.

Aus der WO 99/29509 sind teilweise geprägte Deckelelemente für Nahrungsmittelbehälter bekannt, die aus einem Folienmaterial bestehen, das unter anderen aus folgenden dreilagigen Verbundkombinationen bestehen kann: Aluminium/Papier/Kunststoff, Aluminium/Papier/Aluminium oder Aluminium/Kunststoff/Aluminium.
Aluminium ist jedoch nicht gegen alle Füllgüter beispielsweise, Joghurt, Schmelzkäse, Milchprodukte, Säfte, Pasteten, Erdnüsse und dergleichen beständig.

Daher müssen diese dreilagigen Verbunde an der dem Füllgut zugewandten Seite jedenfalls mit einer vollflächigen lebensmittelechten (Einhaltung der lebensmittelrechtlichen Bestimmungen) Beschichtung versehen sein.

Ferner besteht insbesondere beim Transport der Verpackungen, die mit Aluminiumabdeckungen verschlossen werden, die Gefahr des so genannten Flexcracks, die im Wesentlichen durch die Bewegung des Füllgutes entstehen. Es treten Knicke in der Aluminiumschicht der Behälterabdeckungen auf. Diese Knicke führen in weiterer Folge zu Undichtheit, die darin verpackte Ware kann austreten oder verdirbt.

Aufgabe der Erfindung war es einen Folienverbund für Verpackungsmaterial, insbesondere Behälterabdeckungen bereitzustellen, der eine verbesserte Durchstoß- und Einreißfestigkeit, sowie ausgezeichnete Füllgutbeständigkeit aufweist.

Gegenstand der Erfindung ist daher ein Folienverbund für Verpackungsmaterial, insbesondere für Behälterabdeckungen, dadurch gekennzeichnet, dass der Folienverbund aus einem symmetrischen Kunststoff/Aluminium/Kunststoffverbund besteht.

Der Folienverbund kann an der dem Produkt zugewandten Seite ferner eine heißsiegelnde Beschichtung aufweisen.

Vorzugsweise wird als Kunststoff im erfindungsgemäßen Verbund eine Folie aus Polypropylen, Polyethylen, Polyamid, besonders bevorzugt Polyester verwendet.

Zwischen zwei Kunststofffolien wird eine Aluminiumfolie unter Verwendung eines Kaschierklebers einkaschiert.
Vorzugsweise werden bekannte Kaschierkleber auf Polyurethanbasis verwendet.

Die Dicke der Kunststofffolien kann jeweils 3 - 100 µm, bevorzugt 10 -30 µm betragen.
Die Dicke der zwischen den Kunststofffolien eingeschlossenen Aluminiumschicht kann etwa 3 - 40 µm, bevorzugt 6 - 15 µm betragen.

Durch die Situierung der Aluminiumfolie in einem symmetrischen Verbund zwischen zwei Kunststofffolien ergeben sich zahlreiche Vorteile.

Der Verbund ist absolut korrosionsbeständig und lebensmittelecht (Einhaltung der lebensmittelrechtlichen Bestimmungen). Ferner weist der Verbund eine gegenüber vergleichbaren Verbunden oder Aufbauten mit einfacher Al-Folie die an ihrer Oberfläche Aluminium aufweisen, eine verbesserte Durchstoß- und Einreißfestigkeit auf.
Es werden Flexcrack-Beschädigungen ausgeschlossen, diese werden durch die Kunststofffolien an den Außenseiten des Verbundes verhindert.

Ferner kann die Aluminiumfolie bedruckt sein, wobei sowohl auf der Außen- als auch auf der Innenseite Druckfarben verwendet werden können, da die bedruckte Oberfläche durch die Kunststofffolie abgedeckt ist und die Druckfarbe nicht in Berührung mit dem Füllgut kommen kann.

Bei Verwendung lasierender Druckfarben bei der Bedruckung der Aluminiumfolie können zusätzlich Matt/Glanz-Effekte erreicht werden.

Ferner ist der Folienverbund wirtschaftlicher herstellbar, da gegenüber den bekannten Verbunden weniger teure Aluminiumfolie (nur eine Folie anstelle von bisher zwei Folien als äußere Folien eines Verbundes) notwendig ist.

Der Folienverbund kann ungeprägt oder zumindest teilweise geprägt sein um die Vereinzelbarkeit der Folienzuschnitte, beispielsweise in Form von Behälterabdeckungen, zu gewährleisten. Gegebenenfalls können an der Oberfläche dazu auch Abstandshalter aufgebracht sein. Solche Abstandshalter sind beispielsweise aus der WO 01/68475 in Form von expandierenden partiellen Beschichtungen bekannt. Es können aber auch andere drucktechnisch aufgebrachte partielle Beschichtungen als Abstandshalter verwendet werden.

In den folgenden Beispielen sind bevorzugte Ausführungsformen der Erfindung erläutert.

### Beispiel:

Vergleich der Bruchlast (N/15mm) und der Dehnung (%) und der Durchstoßfestigkeit
Aufbau 1 PET 12/AI 15/PET 12 (erfindungsgemäß)
Aufbau 2 PET 12/AI 25/PET 12 (erfindungsgemäß)
Aufbau 3 Al 15/PET 12/AI 15 (Stand der Technik

| | 1 | 2 | 3 |
|---|---|---|---|
| Bruchlast längs | 73,9 | 75,2 | 71,0 |
| Bruchlast quer | 97,7 | 104,7 | 71,5 |
| Dehnung längs | 116,0 | 60,5 | 19,1 |
| Dehnung quer | 78,6 | 58,0 | 22,3 |
| Durchstoßfestigkeit Dorn 9,5 mm Öffnung 70 mm | 109,2 | 100,6 | 56,0 |

## Patentansprüche

1. Folienverbund für Verpackungsmaterial, insbesondere für Behälterabdeckungen, **dadurch gekennzeichnet, dass** der Folienverbund aus einem symmetrischen Kunststoff/Aluminium/Kunststoff-Verbund besteht.

2. Folienmaterial nach Anspruch 1, **dadurch gekennzeichnet, dass** als Kunststoff Folien aus Poylpropylen, Polyethylen, Polyamid, oder Polyester verwendet werden.

3. Folienverbund nach einem der Ansprüche 1 oder 2, **dadurch gekennzeichnet, dass** die Dicke der Aluminiumfolie 6-100 µm beträgt.

4. Folienverbund nach einem der Ansprüche 1 bis 3, **dadurch gekennzeichnet, dass** die Dicke der Kunststoffschicht 5- 50 µm beträgt.

5. Folienverbund nach einem der Ansprüche 1 bis 4, **dadurch gekennzeichnet, dass** die Aluminiumfolie mit den Kunststofffolien mittels eines Kaschierklebers verbunden ist.

6. Folienverbund nach einem der Ansprüche 1 bis 5, **dadurch gekennzeichnet, dass** der Folienverbund auf der dem Füllgut zugewandten Seite mit einer zumindest partiellen Heißsiegelklebeschicht versehen ist.

7. Folienverbund nach einem der Ansprüche 1 bis 6, **dadurch gekennzeichnet, dass** die Aluminiumfolie ein- oder beidseitig mit einer vollflächigen oder partiellen Bedruckung versehen ist.

8. Folienverbund nach einem der Ansprüche 1 bis 7, **dadurch gekennzeichnet, dass** der Folienverbund zur Verbesserung der Vereinzelbarkeit geprägt ist.

9. Folienverbund nach einem der Ansprüche 1 bis 8, **dadurch gekennzeichnet, dass** zumindest auf einer Seite des Folienverbunds Abstandshalter zur Verbesserung der Vereinzelbarkeit aufgebracht sind.

10. Verwendung des Folienverbunds nach einem der Ansprüche 1 bis 9 als Zuschnitte bzw. Stanzteile für Behälterabdeckungen.
